# EUROPEAN PATENT SPECIFICATION

(11) **EP 2 482 102 B1**
(45) Date of publication and mention of the grant of the patent: **18.06.2014**
(21) Application number: 11152965.7
(22) Date of filing: 01.02.2011
(51) Int. Cl.: G01T 1/29

(54) **Gamma-ray imaging device**
Gamma-Strahl-Abbildungsvorrichtung
Dispositif d'imagerie par rayons gamma

(43) Date of publication of application: 01.08.2012
(73) Proprietor: GSI Helmholtzzentrum für Schwerionenforschung GmbH, 64291 Darmstadt (DE)
(72) Inventor: Engert, Tobias, 69518, Abtsteinach (DE); Gerl, Jürgen, 63128, Dietzenbach (DE); Kojouharov, Ivan, 55270, Zornheim (DE); Namita, Goel, 64291, Darmstadt (DE); Domingo Pardo, Cesar, 46182, La Canyada (ES); Ameil, Frederic, 64390, Erzhausen (DE)

(56) References cited:
- WO-A1-01/36997
- WO-A1-03/034052
- US-A1- 2009 310 735
- N. GOEL, C. DOMINGO-PARDO, T. ENGERT, J.GERL, I. KOJOUHAROV AND H. SCHAFFNER: "scanner for gamma-ray detectors", GSI SCIENTIFIC REPORT 2009, [Online] June 2010 (2010-06), pages 304-304, XP002635946, ISSN: 0174-0814 Retrieved from the Internet: URL:http://www.gsi.de/informationen/wti/li brary/scientificreport2009/PAPERS/INSTRUME NTS-METHODS-24.pdf> [retrieved on 2011-05-09]

## Description

The invention relates to an imaging device, comprising at least one diametrically emitting illuminating device and at least one position sensitive detecting device. The invention further relates to a method of imaging an object, using externally applied radiation, wherein a diametrically emitting radiation source is used, and wherein a first radiation particle is used for illuminating the object to be imaged, while a second, diametrically emitted radiation particle is used for position sensitive detection.

For investigating the structure of an object (a piece of material, a certain type of machinery, a detector device, or even biological samples like tissue samples or living organisms like animals and human beings) a wide variety of different imaging methods is known in the state of the art.

According to a common approach, the object to be investigated is illuminated by a certain type of radiation (where sometimes a mixture of different types of radiation is used as well). Depending on what to investigate, different types of radiation are used. This includes - without limitation - particle radiation like electrons, neutrons, protons, pions or ions (including heavy ions) as well as radiation from the electromagnetic spectrum (starting from the radio-magnetic spectrum up to the gamma ray spectrum and even beyond). Furthermore, sometimes sound waves or the collective movement of individual particles of the object to be examined (for example so-called phonons in solid-state physics) are used as well.

In particular, if the inner structure of an object has to be examined, x-rays (or Röntgen rays) are widely used. If an object to be examined is illuminated by x-rays, the simplest approach is to place a radiographic film (or a different type of position sensitive detector) behind the object to be examined. This way, a shadow image of the object (including internal features of the object) can be obtained.

It is also possible to generate a series of such shadow images from different angles. Using digital image processing, a three-dimensional image of the object can be obtained from such a series of shadow images. This way, a three-dimensional image (and additionally two-dimensional images from directions which were not taken by "direct" measurement) can be generated.

Instead of using externally applied radiation, in some instances a radiation originating from the object itself can be used for imaging purposes. As an example, for homeland security applications (scanning luggage of aviation passengers for radioactive substances, for example) such methods can be used at least in part. Usually, the range of substances that can be detected by such methods is very limited.

It has even been suggested to place actively radiating probes inside an object to be examined. Such an approach has been used for certain medical applications. However, such an approach requires to manipulate the object (normally requiring surgery or at least an injection for medical applications).

Still other imaging methods have been suggested in the state of the art.

Another "general" principle is to use the interaction of radiation that comes from an external radiation source, to apply this radiation to the object to be examined and to measure interactions between said applied radiation and the material of the object. Since usually several aspects of the interaction between the radiation and the object depend strongly on the respective material (for example its density, its nuclear weight, its electron configuration, its chemistry, its isotope and so on), it is quite often possible to measure certain aspects of the object very precisely.

A first example of such an imaging method is the positron emission tomography (PET). Here, an external positron radiation source is used for imaging methods. The external positron radiation source emit positrons towards the object to be examined. Two 511 keV gamma-quanta, generated by an electron-positron annihilation in the object to be examined and emitted in opposite directions from the electron-positron-annihilation-site are registered using two radiation detectors. Thus, a line in space, where the election-positron-annihilation occurred, is accurately defined. A series of such measurements allows one to reconstruct a three-dimensional image of the spatial distribution and intensity of the positron source. One example of such an imaging via externally applied positron radiation is described in the publication "High-resolution gamma backscatter imaging for technical applications" by Juergen Gerl, Frederic Ameil, Ivan Kojouharov and A. Surowiec in Nuclear Instruments and Methods in Physics Research A, 2004.

Another technique is the single-photon emission tomography (SPECT). Here, a radiation detector with high precision resolution is used in order to monitor the spatial distribution of a gamma-ray emitting source. One example of such a high precision-sensitive radiation detector is described in the publication "A Position Sensitive Gamma-Ray Scintillator Detector With Enhanced Spatial Resolution, Linearity, and Field of View" by César Domingo-Pardo, Namita Goel, Tobias Engert, Juergen Gerl, Masahiro Isaka, Ivan Kojouharov and Henning Schaffner in IEEE Transactions on Medical Imaging, 2009.

In WO 03/034052 A1 an imaging system is described which utilises pairs of gamma ray photons, the members of each pair are travelling in mutually opposite directions. A position sensitive detection of the first of a photon pair allows determination of the direction of the second photon. This information is used in conjunction with the information derived from back scattering of the second from the target volume and permits the generation of a two-dimensional image of the density distribution within the target volume.

In GSI scientific report 2009, June 2010 (2010-06), page 304 (ISSN: 0174-0814), "Scanner for gamma-ray detectors" by Namita Goel, César Domingo-Pardo, Tobias Engert, Juergen Gerl, Ivan Kojouharov and Henning Schaffner, it is proposed to scan a germanium detector by two sets of measurements from different directions, using a Na22 radioactive source and a position sensitive detector, arranged on the rear side of said Na22 radioactive source.

However, when using the already known methods and devices for practical imaging applications, it has been realised that certain limitations and disadvantages still exist.

Therefore, it is an object of the invention to provide an imaging device, comprising at least one diametrically emitting illuminating device and at least one position sensitive detecting device that is improved over imaging devices, known in the state of the art, as defined in claim 1.

It is suggested to design an imaging device, comprising at least one diametrically emitting illuminating device and at least one position sensitive detecting device in a way that at least one coincidence detecting device is used. The diametrically emitting illuminating device comprises a positron source and an annihilation of a positron with an electron generates a first radiation and a second radiation that are leaving the diametrically emitting illuminating device in diametrically opposed directions. The imaging device is designed in a way that it is determined whether a temporal coincidence of the signal detected by said position sensitive detecting device and the signal detected by said coincidence detecting device is present. At least one of said position sensitive detecting devices and at least one of said coincidence detecting devices are arranged at least in part as independent devices. Said two devices are arranged at an angle so that radiation that is scattered at an angle of ≤150° can be detected by the coincidence detecting device. While it is possible that certain parts of the imaging device can fall together, it is preferred that in particular at least one position sensitive detecting device and/or at least one coincidence detecting device are designed as a separate unit, respectively (in particular at least as separate functional units and/or at least as separate mechanical units). These statements are usually mainly related to the mechanical realisation of the respective components. In particular, it is possible to arrange said devices on different holding devices. This way, it is possible that both devices can be moved independently from each other and/or relative to each other. As an example, it is possible that at least one of said position sensitive detecting devices can be "moved around", while at least one of said (preferably a plurality and/or all of said) coincidence detecting devices are more or less fixedly attached. This can simplify the arrangement. Furthermore, due to the simpler attachment means, it is very easy (and even preferred) to use a more or less large number of coincidence detecting devices. This way, it is usually possible to significantly shorten the necessary imaging time. But even if only a single coincidence detecting device is used, it is possible to arrange said coincidence detecting device and at least one of said position sensitive detecting devices at an angle that is yielding a relatively large "coincidence output". This has to be compared to a situation where the coincidence detecting device and the position sensitive detecting device are arranged as a single device. In this case, only radiation that is "backscattered" can be detected by the coincidence device. Normally, however, only a comparatively small fraction of the overall radiation will be "backscattered" radiation, resulting in an enlarged measuring time and/or in a reduced imaging capability. By "backscattering" in particular interactions are meant, in which at least a fraction of the outgoing radiation will be emitted at an angle of ≥90°, preferably of ≥120°, even more preferred of ≥150°, in particular of ≥170°. Of course, usually at least one position sensitive imaging device will have to be operated in temporal coincidence with at least one other (coincidence) radiation detector and/or coincidence detecting device. This usually necessitates at least in part a common signal processing method. While usually at least one of said coincidence detecting devices is forming part of the at least one imaging device, it is possible that at least in certain applications at least one coincidence detecting device may be (at least in part) the object to be examined itself, as well. While the imaging device is operational, even if only a single position sensitive detector device, a single diametrically emitting illuminating device and/or a single coincidence detecting device is present (which will usually result in a particularly simple and comparatively cheap imaging device), it is possible that for one or several of said mentioned devices, a plurality of such devices is used. In particular, when using a plurality of position sensitive detecting devices, it is usually possible to enlarge the sensitive area (and hence in a certain sense the sensitive volume) of the imaging device. Therefore, larger objects can be examined and/or the time needed for imaging can be reduced. When using a plurality of coincidence detecting devices, normally a larger percentage of the radiation, radiated by the diametrically emitting illuminating device can be used for imaging purposes. In particular, a larger dihedral angle and/or a larger solid angle can be covered by the (array of) coincidence detecting devices. This way, it is usually possible to reduce the "exposure time" for the imaging device. This can not only shorten the imaging process, but can make the imaging process also cheaper and a lower radiation intake is necessary (which can be of advantage, in particular in medical applications and/or when examining objects that are sensitive to the radiation/easily affected by the radiation used by the imaging device. As a diametrically emitting illuminating device, essentially any type of illuminating device can be used, provided that from the emission of a first radiation part (in particular particle, quantum) leaving the illuminating device, the direction of (at least) a second radiation part (particle; quantum) can be concluded. This "connection" between both radiation parts is particularly simple, if those parts are leaving the illuminating device in (essentially) diametrically directions and/or at (essentially) the same time. However, other angles or the like (including even a different number of particles) can be thought of as well. As a position sensitive detecting device, all types of detectors that are generating a position sensitive signal can be used. In particular, the sensitivity can be one-dimensional (so that it is "only" possible to determine along which "line" a radiation part has been emitted), two-dimensional (so that a point in a plane, where the emitted radiation part has been detected can be determined, for example) or even three-dimensional. In particular, all types of detectors that are presently known and/or that are commercially available and/or that can be manufactured can be used. By a coincidence detecting device, an even larger variety of detector types can be used. For example, it is likewise possible that the coincidence detecting device is at least in part and/or at least at times not position sensitive and/or at least in part and/or at least at times position sensitive (one-dimensional, two-dimensional and/or three-dimensional). Furthermore, it is likewise possible that the coincidence detecting device is at least in part and/or at least at times not energy resolving and/or at least in part and/or at least at times energy resolving. The normally essential feature of the coincidence detecting device is that the coincidence detecting device has to be able to determine, whether there exists a coincidence between the signal, detected by the coincidence detecting device and the signal, detected by the position sensitive detecting device. This does not necessarily mean that the signal has to be detected at (essentially) the same time. Instead, certain delays by (different) measurement principles, interaction processes (in particular between the radiation emitted by the diametrically emitting illuminating device and the object to be examined or the like) might have to be considered. Although generally both the at least one position sensitive detector device and/or the at least one coincidence detecting device are sensitive for the radiation that this emitted by the diametrically emitting illuminating device, it is additionally or alternatively possible that they are sensitive to other types of radiation and/or to other radiation spectra as well.

The imaging device is designed in a way that at least one of said diametrically emitting illuminating devices emits at least in part and/or at least at times electromagnetic radiation, namely from the gamma-ray spectrum. First experiments have shown that with electromagnetic radiation especially internal structures of objects can usually be measured very precisely. The gamma-ray spectrum can be defined to lie be-tween 400 and 600 keV, preferably between 450 to 550 keV, more preferably between 500 and 520 keV and in particular at or around 511 keV. Likewise, first experiments have shown that these energy ranges are particularly useful for imaging purposes. Even more particular, due to the use of the 511 keV gammy-ray energy range, the presently proposed method is particularly useful for imaging objects made of materials with a high atomic mass number Z (for example between Z=20 and Z=60, preferably between Z=30 and Z=50, even preferred between Z=45 and Z=55) and/or for large objects and/or for dense objects (especially when compared to "conventional" x-ray imaging methods). This effect can be particularly useful for imaging biological samples.

It is suggested to design the imaging device in a way that at least one of said diametrically emitting illuminating devices is designed, at least in part, as an anti-particle source, in particular as a positron source. It is well-known in physics that anti-particles, when "meeting" their corresponding particle (for example, when a positron "meets" an electron), will annihilate, generating two gamma-quanta, leaving the annihilating site in opposite directions. Using this effect, a diametrically emitting illuminating device can be constructed comparatively easily.

In particular, it is possible that at least one of said diametrically emitting illuminating devices is designed, at least in part, as a radioactive isotope, in particular as Na22. Using such a radioactive isotope, a comparatively simple, but very usable diametrically emitting illuminating device can be provided. Preferably, the radioactive isotope (or another type of illuminating device) has a very small size (preferably a point-like extension), so that the resolution, achievable when using the illuminating device can be enhanced. Moreover, when using a radioactive isotope with a relatively short half-life and/or with a high activity, the intensity of the emitted radiation can be enhanced and/or the size of the respective illuminating device can be reduced. In preferred embodiment, the imaging device can be achieved if at least one of said diametrically emitting illuminating devices comprises at least one collimating device, in particular at least one collimating device showing at least in part a cone-like shape, a double-cone-like shape, a polyhedral-like shape and/or a double-polyhedral-like shape. This way, the resulting imaging device can be focused on the area to be examined and/or can be adapted to the size and/or the shape of the at least one position sensitive detecting device. In particular, a cone-like shape and/or a double-cone-like shape is usually preferred when the position sensitive detector has an essentially circular photocathode. A polyhedral-like shape (pyramide-like shape) and/or a double-polyhedral-like shape (a double-pyramide-like shape) is usually preferred if the position sensitive detector has an essentially square photocathode. In other words, a polyhedral-like shaped collimator would typically have an essentially polyhedral (pyramidal) opening, while a double-polyhedral-like shaped collimator would typically have two essentially polyhedral (pyramidal) openings. This way, the resolution and/or sensitivity can be enhanced. Additionally,the signal-to-noise-ratio can also be increased, usually even significantly.

According to the invention, said position sensitive detecting devices is a gamma-ray detector device, preferably comprising at least one scintillating device and/or at least one photomultiplier device. Such devices typically show a high gain, a high sensitivity and/or a high-resolution. Furthermore, such devices are commercially available, so that the resulting imaging device can be comparatively cheap and can be easily build, even in relatively large numbers.

According to the invention, the imaging device is obtained, if at least one of said coincidence detecting devices is designed at least in part as a gamma-ray detecting device and/or as a position sensitive detecting device and/or as a particle detecting device. When particles can be detected by the respective device, in particular Compton electrons can be detected. As it is well-known from physics, Compton electrons can be generated, when a gamma-ray is hitting a "stationary" electron within an object. This way, respective signals can be detected, potentially increasing the sensitivity and/or the preciseness of the resulting image. The same can be true in analogy, if at least one of said coincidence detecting devices is detecting gamma-rays. In particular, these can be scattered gamma-quanta in a Compton scattering processes. If at least one of said coincidence detecting devices is position sensitive, usually a higher quality and/or a higher resolution of the resulting image, obtainable by the imaging device, can be achieved.

Even more preferred, the imaging device can be designed in a way that at least two parts of said imaging device, in particular at least one of said diametrically emitting illuminating devices and at least one of said position sensitive detecting devices, are fixedly arranged relative to each other, in particular in at least one dimension relative to each other. The expression "fixedly arranged" can be understood in the sense of "fixed" (in particular with respect to the respective dimension/direction/angular direction) and/or in the sense of "physically coupled". This one dimension can be, as an example, an (dihedral) angle (in particular a (three-dimensional) angle between the respective components), a straight line (so that a distance can be changed, but no movement in a sideward direction is possible, for example) or the like. Fixing such an arrangement, will usually result in a higher resolution and/or a higher quality of the resulting images.

However, it is also possible that at least two parts of said imaging device, in particular at least one of said diametrically emitting illuminating devices and at least one of said position sensitive detecting devices and/or at least one of said diametrically emitting illuminating devices (8) and at least one of said coincidence detecting devices (4), are variable in distance relative to each other. Using such a design, it is in particular possible to vary the resolution (in particular the position resolution) of the imaging device (while usually reducing the size of the imaging area) and/or to increase the size of the imaging area (while usually reducing the resolution - in particular the position resolution - of the obtainable image). This flexibility can be very advantageous, at least in certain applications.

Another preferred embodiment can be obtained, if at least parts of said imaging device are mounted on a movable holding device. This way, the relative positions of (some of) the parts of the imaging device can be fixed relative to each other. This way, the resolution and/or the quality of the resulting image can be enhanced. However, when moving the whole imaging device (or parts thereof), the imaging area can be enlarged and/or an image can be taken from several angles (so that a three-dimensional picture of the object to be imaged can be obtained, for example). In particular, the respective parts of the imaging device can be arranged in a way that they can be rotated around a rotating axis. It is obvious that the characteristics of such a design can be advantageous.

Preferably, at least one controlling device and/or at least one graphics generating device and/or at least one calibration data generating device and/or at least one calibration data storing device is provided. This way, the imaging device can be used more flexible and/or can be sold as a pre-manufactured device. The respective devices can be designed as electronic devices (for example as computer devices and/or as single printed circuit computing devices).

An even more preferred embodiment of the imaging device can be achieved if at least one of said position sensitive detecting devices and/or at least one of said coincidence detecting devices is at least in part and/or at least at times energy resolving. This way, it is possible to "look" for different properties of the object to be examined. In particular, it is usually possible to identify different materials, a different chemistry or the like. Using this embodiment, it is possible to obtain images of the object, containing a plethora of information. In particular, this embodiment makes sense, if the respective device is (at least in part) the object under examination itself. This way the object-detector itself may act as a coincidence detector. If, in addition, the object-detector is at least in part energy resolving, it is possible to apply cuts in the energy-response of the object-detector. In that way one can also image structural (in particular non-detecting) materials around it, as well as the sensitive volume itself. Furthermore, the detection sensitivity of the whole system can be very much enhanced. Therefore, the effective illuminated area can be used in the most effective way.

It is further proposed to design the imaging device with a plurality of position sensitive detecting devices and/or a plurality of diametrically emitting illuminating devices. If said devices are arranged in some kind of an array, it is usually possible to enlarge the area (volume) that can be examined at the same time. This can reduce the overall measurement time. Furthermore, it can be possible to enhance the resolution of the imaging device as well.

The present invention and its advantages will become more apparent, when looking at the following description of possible embodiments of the invention, which will be described with reference to the accompanying figures, which are showing:
- Fig. 1:: a first embodiment of the invention in a schematic view from above;
- Fig. 2:: a second embodiment of a radiation source in a schematic view from the side;
- Fig. 3:: an imaging device in a calibrating arrangement in a schematic view from above;
- Fig. 4:: a method for imaging an object in a schematic flowchart.

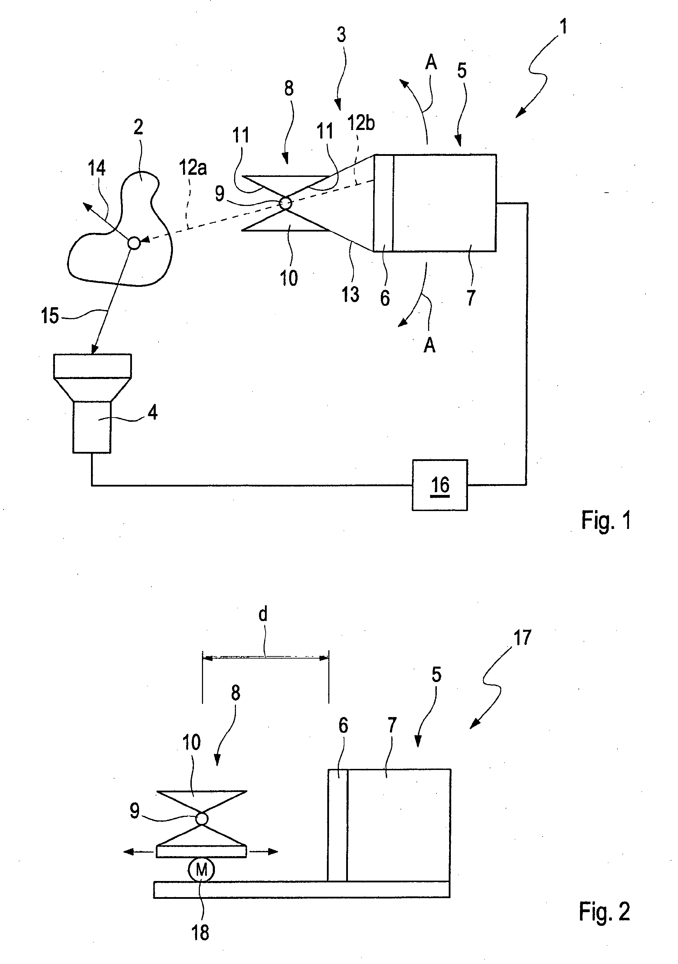

In Fig. 1, a first possible embodiment of an imaging device 1 for imaging the structure (both the outer structure as well as the inner structure) of an object 2 to be examined is shown. The imaging device 1 consists essentially of an imaging tube 3 and a coincidence gamma-ray detector 4. The imaging tube 3 is designed as a singular unit and comprises several components within a common housing. The imaging tube 3 comprises a position sensitive gamma-ray detector 5. As a position sensitive gamma-ray detector 5, a commercially available gamma-ray detector can be used. As can be seen schematically from Fig. 1, the position sensitive gamma-ray detector 5 has a scintillation crystal 6 and a photomultiplier tube 7 in direct contact to the scintillation crystal 6. The scintillation crystal 6 can be a continuous or pixelated scintillation crystal 6. As a non-limiting example, the material of the scintillation crystal 6 can be made out of Nal, BGO, LSO (lutetium orthosilicate), LYSO (lutetium yttrium oxyorthosilicate) BaF₂, LaBr₃ etc. In the embodiment shown, the scintillation crystal 6 has a diameter of 76 mm and a thickness of 3 mm. As a photomultiplier tube 7, a position sensitive photomultiplier tube 7, commercially available from Hamamatsu Company under part number R2486 was used.

As a gamma-ray source 8, a small sized ("point-like") positron source 9 was used. In the present example, the sodium isotope Na22, which is radioactive, was used as a positron source 9. This isotope has a relatively short half-live, thus resulting in a comparatively high gamma-ray output. The positron source 9 is positioned in a collimator 10, where the collimator has an inner structure with two opposedly connected hollow truncated cones 11.

The positron source 9 will generate positrons through radioactive decay. Once a positron is generated, it will "find" an electron soon afterwards. The particle (electron) and its associated anti-particle (the positron) will annihilate, generating two gamma-ray quanta with an energy of approximately 511 keV each, flying in two diametrically opposed directions. The path of the two generated gamma quanta 12a, 12b is indicated in Fig. 1. Of course, the two indicated paths 12a, 12b are only an example for possible paths. Due to the statistical nature of the path's direction 12a, 12b, a full sphere will be covered after a sufficient time span.

However, in the present embodiment, shown in Fig. 1, a collimator 10 is provided. This will reduce the "allowed" gamma-ray path 12a, 12b to a certain dihedral angle 13. The dihedral angle 13 is chosen in a way, so that the scintillation crystal 6 of the position sensitive gamma-ray detector 5 is fully covered. However, the dihedral angle 13 is essentially not larger than the scintillation crystal 6. The distance between the imaging tube 3 and the object 2 will be chosen in a way that the dihedral angle 13 pointing into the direction of the object 2 will cover the parts of the object 2 to be examined.

The limitation of the dihedral angles 13, and hence of the illuminated area by use of the collimator 10 has the effect that unwanted emissions and background noise are reduced. This will usually remarkably increase the signal-to-noise ratio and will usually enhance the gamma-ray sensitivity of the imaging device 1.

By virtue of the two diametrically opposed gamma-ray paths 12a, 12b it is possible to determine the flying path of the "forward flying" gamma-quantum 12a by measuring the position of the "backwards flying" gamma-quantum 12b using the position sensitive gamma-ray detector 5. Using this "trick", the "forward" flying path 12a can be determined without influencing the respective "forward flying" gamma-quantum 12a. This will result in a better resolution and quality of the resulting image.

Once the "forward flying" gamma-quantum 12a hits the object 2, there is a possibility that the gamma-quantum 12a will hit an electron within the object 2. This will lead to a so-called Compton scattering event. Therefore, an electron 14 will be accelerated (the so-called Compton electron), while at the same time a scattered gamma-quantum 15 is emitted. The scattering event has to fulfil the law of the conservation of momentum, of course. Due to the statistical nature of the scattering events the entire depth of the object 2 will be covered during the measuring process. Furthermore, the probability for a Compton scattering event depends on the exact material, its density and on further characteristics within the respective volume section of the object 2. Therefore, it is possible to image the internal and external structure of the object 2 by the imaging device 1.

Whether a Compton scattering effect took place or not, will be determined by the coincidence gamma-ray detector 4, detecting the simultaneous occurrence (coincidental occurrence) of a scattered gamma-quantum 15. If the coincidence gamma-ray detector 4 "fires" in timewise coincidence with a signal, detected by the position sensitive gamma-ray detector 5, the respective Compton scattering event will be evaluated by the electronic controller unit 16, eventually leading to an image of the object 2 to be examined.

If the coincidence gamma-ray detector 4 is position sensitive and/or energy sensitive, the Compton scattering event can be better reconstructed by the electronic controller 16. Hence, a better image can be calculated. Presumably by virtue of such a position sensitive and/or energy sensitive coincidence gamma-ray detector 4, it is even possible to determine a depth signal. If, however, a very "crude" gamma-ray detector 4 is used (no energy resolution and/or no position detection), at least a two-dimensional "shadow image" of the object 2 can be achieved.

The position sensitive gamma-ray detector 5 is mounted on a rotatable table (not shown, but indicated by rotating arrows A). Therefore, "shadow images" of the object 2 can be taken from different directions. If a sufficient amount of such pictures has been taken, the electronic controller 16 can calculate a three-dimensional image of the object 2. For this, standard CT-algorithms (CT = Computer Tomography), well-known in the state of the art, can be used.

As can be seen from Fig. 1, the coincidence gamma-ray detector 4 only covers a very small dihedral angle. Therefore, only a very small fraction of Compton scattering events inside the object 2 is recorded. For improving the sensitivity of the imaging device 1, in practical applications a large number of coincidence gamma-ray detectors 4 will be placed around the object 2. However, these additional coincidence gamma-ray detectors 4 should not be placed at positions, interfering with the moveability A of the imaging tube 3.

Also, a plurality of imaging tubes 3 can be employed as well. This way, a larger dihedral angle can be scanned at one time, increasing the speed of the imaging process.

In Fig. 2 another possible embodiment of an imaging tube 17 is shown. Similar to the embodiment, shown in Fig. 1, a position sensitive gamma-ray detector 5 (comprising a scintillation crystal 6, a position sensitive photomultiplier tube 7) and a positron source 9, arranged within a collimator 10, thus forming a gamma-ray source 8, is shown. However, as indicated in Fig. 2, the distance d between the positron source 9 and the front edge of the position sensitive gamma-ray detector 5 can be varied with the help of an actuator 18 (for example a stepper motor). The actuator 18 can be driven by the electronic controller 16, for example. By varying the distance d, the gamma-ray source 8 can be positioned in a way that a smaller dihedral angle 13 will completely cover the scintillator crystal 6. This way, the possible resolution of the image can be enhanced. Of course, as a drawback, the dihedral angle, facing the object (and therefore the surface area, being actively scanned) will decrease likewise, thus increasing the total imaging time for the given object 2.

Although not explicitly shown, it is possible to modify the setup, shown in Fig. 2, in a way that the actuator 18 is placed below the bottom plate, shown in Fig. 2. This way, the whole "block" of gamma-ray source 8 and position sensitive gamma-ray detector 5 (i.e. the imaging tube 17) can be moved altogether. This way, one can vary the magnification or zoom of the imaging tube 17, without affecting the intrinsic field-of-view of the position sensitive gamma-ray detector 5.

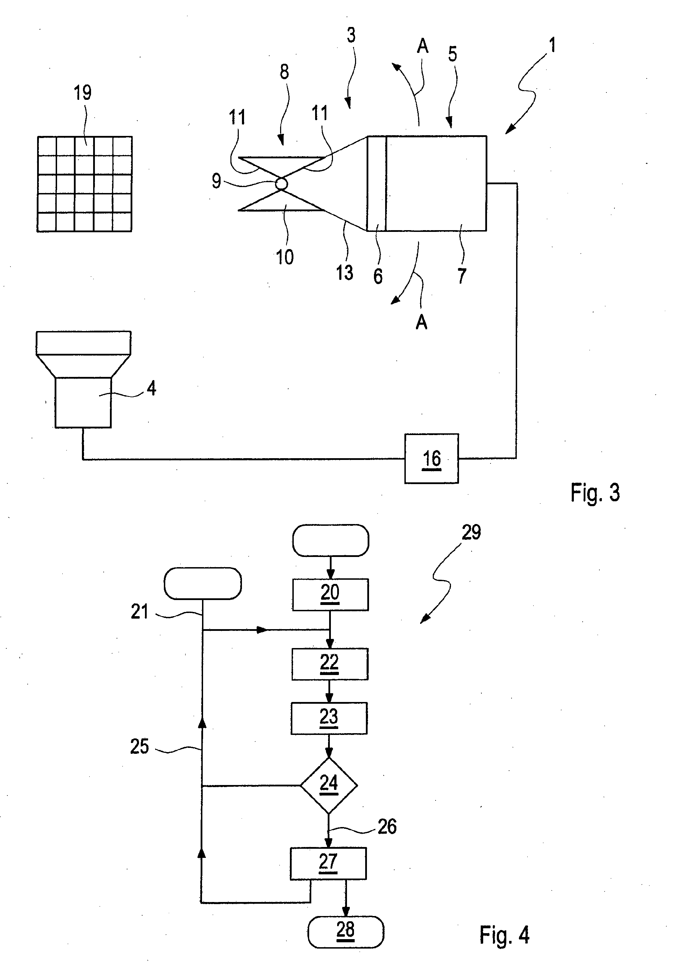

In Fig. 3, the imaging device 1 as shown in Fig. 1 is shown once again. However, instead of an (unknown) object 2 to be examined, a well known sample object 19 (i.e. its outer and inner structure is previously known) is used. The sample object 19 (which also extends in a direction being perpendicular to the drawing's plane) is furthermore placed and arranged in a certain manner and direction. The respective data of the sample object 19 is fed into the electronic controller 16. With this information, the electronic controller 16 will perform a measurement cycle. However, this measurement cycle is not used for gaining output data; instead, this measurement cycle will be used for calibrating the imaging device 1. This calibration cycle can be performed once, after an initial arrangement of the imaging device 1. Also, it is possible to perform such a calibration cycle from time to time for increasing the preciseness of the resulting measurements. Preferably, an advantageous shape and/or structure is used for the sample object 19.

Furthermore, if one uses the setup, as shown in Fig. 3, without the well-known sample object 19 (or any other object in place), it is possible to directly measure the response function of the coincidence gamma-ray detector 4. For doing this, the position (in particular the angular position) of the combined unit, comprising the gamma-ray source 8 and the position sensitive gamma-ray detector 5, (i.e. of the imaging tube 3, 17) has to be set in a way that a direct line can be drawn between the positron source 9 and the coincidence gamma-ray detector 4. The knowledge of the response function can be used for a better calibration of the imaging device 1, thus resulting in more accurate measurements of "real" of objects.

Finally, in Fig. 4, a flow chart 29 of a method for imaging an object is depicted. Initially, a calibration cycle 20 is performed (c.f. the arrangement shown in Fig. 3). This calibration cycle step 20 does not necessarily have to be performed every time. Therefore, a measurement cycle can start after the calibration cycle step 20. This is indicated in the flowchart 29 by an optional entry-point 21.

Now, the electronic controller 16 waits for an input signal from the position sensitive gamma-ray detector 5 (step 22). Once such a position dataset is received in step 22, a coincidence signal is inputted in step 23. In a checking step 24 it is checked whether the coincidence signal and the position data signal are in coincidence timewise. If no such coincidence can be verified, the method jumps back 25, waiting for another position data input. However, if the coincidence can be verified (path 26), the position data will be recorded and used for creating an image of the object 2 (step 27). After the data has been stored and used, the method once again jumps back 25, awaiting another data signal.

Of course, once an image with a sufficient resolution and intensity has been recorded, the backward loop 25 can be broken and the method can be stopped (exit path 28).
- 1: imaging device
- 2: object
- 3: imaging tube
- 4: coincidence gamma-ray detector
- 5: position sensitive gamma-ray detector
- 6: scintillation crystal
- 7: photomultiplier tube
- 8: gamma-ray source
- 9: positron source
- 10: collimator
- 11: truncated cone
- 12: path of gamma-quantum
- 13: dihedral angle
- 14: scattered electron
- 15: scattered gamma-quantum
- 16: electronic controller
- 17: imaging tube
- 18: actuator
- 19: well known sample object
- 20: calibration cycle
- 21: optional entry point
- 22: waiting step for position data
- 23: coincidence signals input
- 24: checking for coincidence
- 25: jump back loop
- 26: coincidence verified-path
- 27: exit path
- 28: create image
- 29: flowchart

## Claims

1. Imaging device (1) for imaging an external object (2), comprising a diametrically emitting illuminating device (8), a position sensitive detecting device (5), and a coincidence detecting device (4), wherein said diametrically emitting illuminating device (8) comprises a positron source and where an annihilation of a positron with an electron generates a first gamma radiation and a second gamma radiation that are leaving the diametrically emitting illuminating device (8) in diametrically opposed directions, wherein the imaging device (1) is designed in a way that it is determined whether a temporal coincidence of the signal detected by said position sensitive detecting device (5) and the signal detected by said coincidence detecting device (4) is present, wherein said position sensitive detecting device (5) and said coincidence detecting device (4) are arranged at least in part as independent devices, **characterised in that** at least two of said diametrically emitting illuminating device (8), said position sensitive detecting device (5) and said coincidence detecting device (4) are variable in distance (d) relative to each other by means of an actuator (18).

2. Imaging device (1) according to claim 1, **characterised in that** at least one of said diametrically emitting illuminating devices (8) is designed, at least in part, as a radioactive isotope (9), in particular as Na22 (9).

3. Imaging device (1) according to any of the preceding claims, **characterised in that** at least one of said diametrically emitting illuminating devices (8) comprises at least one collimating device (10), in particular at least one collimating device (10) shows at least in part a cone-like shape (11) and/or a double-cone-like shape (11) and/or a polyhedral-like shape and/or a double-polyhedral-like shape.

4. Imaging device (1) according to any of the preceding claims, **characterised in that** at least one of said position sensitive detecting devices (5) is a gamma-ray detector device (5), preferably comprising at least one scintillating device (6) and/or at least one photomultiplier device (7).

5. Imaging device (1) according to any of the preceding claims, **characterised in that** at least one of said coincidence detecting devices (4) is designed at least in part as a gamma-ray detecting device (4) and/or as a position sensitive detecting device and/or as a particle detecting device.

6. Imaging device (1) according to any of the preceding claims, **characterised in that** the remaining of said diametrically emitting illuminating devices (8), said position sensitive detecting devices (5) and said coincidence detecting device (4) are fixedly arranged relative to each other.

7. Imaging device (1) according to any of the preceding claims, **characterised in that** at least parts (4, 5, 8) of said imaging device (1) are mounted on a movable (A) holding device.

8. Imaging device (1) according to any of the preceding claims, **characterised in that** at least one of said position sensitive detecting devices (5) and/or at least one of said coincidence detecting devices (4) is at least in part and/or at least at times energy resolving.

9. Imaging device (1) according to any of the preceding claims, comprising an additional position sensitive detecting devices (4) and/or an additional diametrically emitting illuminating devices (5).

## Patentansprüche

1. Bildgebende Vorrichtung (1) für die bildliche Darstellung eines externen Objektes (2), welche eine diametral abstrahlende Bestrahlungsvorrichtung (8), eine positionsempfindliche Detektorvorrichtung (5) und eine Koinzidenz-Erkennungsvorrichtung (4) umfasst, wobei die diametral abstrahlende Bestrahlungsvorrichtung (8) eine Positronenquelle enthält und wobei eine Vernichtung eines Positrons mit einem Elektron eine erste Gammastrahlung sowie eine zweite Gammastrahlung erzeugt, welche die diametral abstrahlende Bestrahlungsvorrichtung (8) in diametral entgegengesetzten Richtungen verlassen, wobei die bildgebende Vorrichtung (1) so konzipiert ist, dass erkannt wird, ob eine zeitliche Koinzidenz zwischen dem durch die positionsempfindliche Detektorvorrichtung (5) erkannten Signal und dem durch die Koinzidenz-Erkennungsvorrichtung (4) erkannten Signal vorliegt, wobei die besagte positionsempfindliche Detektorvorrichtung (5) und die besagte Koinzidenz-Erkennungsvorrichtung (4) zumindest teilweise als getrennte Vorrichtungen angeordnet sind, **dadurch gekennzeichnet, dass** mindestens zwei der besagten Vorrichtungen für die diametrale Bestrahlung (8), für die positionsempfindliche Detektion (5) und für die Erkennung der Koinzidenz (4) in mittels eines Aktuators (18) veränderlichem Abstand (d) zueinander angeordnet sind.

2. Bildgebende Vorrichtung (1) nach Anspruch 1, **dadurch gekennzeichnet, dass** mindestens eine der diametral abstrahlenden Bestrahlungsvorrichtungen (8) zumindest teilweise als radioaktives Isotop (9), insbesondere als Na22 (9), konzipiert ist.

3. Bildgebende Vorrichtung (1) nach einem der vorstehenden Ansprüche, **dadurch gekennzeichnet, dass** mindestens eine der diametral abstrahlenden Bestrahlungsvorrichtungen (8) mindestens eine Kollimatorvorrichtung (10) umfasst, insbesondere mindestens eine Kollimatorvorrichtung (10), die zumindest teilweise eine konusartige Form (11) aufweist, und/oder eine doppelkonusartige Form (11), und/oder eine polyederartige Form, und/oder eine doppelpolyederartige Form.

4. Bildgebende Vorrichtung (1) nach einem der vorstehenden Ansprüche, **dadurch gekennzeichnet, dass** zumindest eine der positionsempfindlichen Detektorvorrichtungen (5) ein Gammastrahlen-Detektor (5) ist, der bevorzugt mindestens eine Szintillatorvorrichtung (6) und/oder mindestens eine Photomultiplikator-Vorrichtung (7) enthält.

5. Bildgebende Vorrichtung (1) nach einem der vorstehenden Ansprüche, **dadurch gekennzeichnet, dass** zumindest eine der Koinzidenz-Erkennungsvorrichtungen (4) zumindest teilweise als Gammastrahlen-Detektorvorrichtung (4) und/oder als positionsempfindliche Detektorvorrichtung und/oder als Teilchendetektor konzipiert ist.

6. Bildgebende Vorrichtung (1) nach einem der vorstehenden Ansprüche, **dadurch gekennzeichnet, dass** zumindest die restlichen Vorrichtungen für die diametrale Bestrahlung (8), besagte positionsempfindliche Detektionseinrichtung (5) und besagte Koinzidenz-Erkennungsvorrichtung (4) in festem Abstand zueinander angeordnet sind.

7. Bildgebende Vorrichtung (1) nach einem der vorstehenden Ansprüche, **dadurch gekennzeichnet, dass** zumindest Teile (4, 5, 8) der besagten bildgebenden Vorrichtung (1) auf einer beweglichen Trägervorrichtung (A) montiert sind.

8. Bildgebende Vorrichtung (1) nach einem der vorstehenden Ansprüche, **dadurch gekennzeichnet, dass** zumindest eine der besagten positionsempfindlichen Detektorvorrichtungen (5) und/oder zumindest eine der besagten Koinzidenz-Erkennungsvorrichtungen (4) zumindest teilweise und/oder zumindest zeitweise als energie-auflösende Vorrichtung arbeitet.

9. Bildgebende Vorrichtung (1) nach einem der vorstehenden Ansprüche, **dadurch gekennzeichnet, dass** sie eine zusätzliche positionsempfindliche Detektorvorrichtung (5) und/oder eine zusätzliche diametral abstrahlende Bestrahlungsvorrichtung (8) umfasst. [korrigiert !!]

## Revendications

1. Dispositif d'imagerie (1) permettant de produire une image d'un objet externe (2) et comprenant un dispositif de rayonnement à émission diamétrale (8), un dispositif de détection sensible à la position (5) et un dispositif de détection de coïncidence (4), ledit dispositif de rayonnement à émission diamétrale (8) comprenant une source de positrons et une annihilation d'un positron par un électron produisant un premier rayonnement gamma et un second rayonnement gamma qui sortent du dispositif de rayonnement à émission diamétrale (8) dans des directions diamétralement opposées, le dispositif d'imagerie (1) étant conçu de manière à déterminer s'il existe une coïncidence temporelle entre le signal détecté par ledit dispositif de détection sensible à la position (5) et le signal détecté par ledit dispositif de détection de coïncidence (4), ledit dispositif de détection sensible à la position (5) et ledit dispositif de détection de coïncidence (4) étant au moins en partie agencés comme des dispositifs indépendants, **caractérisé en ce que** la distance (d) entre au moins deux éléments parmi ledit dispositif de rayonnement à émission diamétrale (8), ledit dispositif de détection sensible à la position (5) et ledit dispositif de détection de coïncidence (4) peuvent être modifiés au moyen d'un actionneur (18).

2. Dispositif d'imagerie (1) selon la revendication 1, **caractérisé en ce qu'**au moins un desdits dispositifs de rayonnement à émission diamétrale (8) est conçu au moins en partie sous la forme d'un isotope radioactif (9), en particulier du Na22 (9).

3. Dispositif d'imagerie (1) selon l'une quelconque des précédentes revendications, **caractérisé en ce qu'**au moins un desdits dispositifs de rayonnement à émission diamétrale (8) comprend au moins un dispositif de collimation (10), en particulier au moins un dispositif de collimation (10) ayant au moins en partie une forme de cône (11) et/ou une forme en double cône (11) et/ou une forme de polyèdre et/ou une forme en double polyèdre.

4. Dispositif d'imagerie (1) selon l'une quelconque des précédentes revendications, **caractérisé en ce qu'**au moins un desdits dispositifs de détection sensibles à la position (5) est un dispositif de détection de rayons gamma (5), qui comprend de préférence au moins un dispositif de scintillation (6) et/ou au moins un dispositif photomultiplicateur (7).

5. Dispositif d'imagerie (1) selon l'une quelconque des précédentes revendications, **caractérisé en ce qu'**au moins un desdits dispositifs de détection de coïncidence (4) est conçu au moins en partie comme un dispositif de détection de rayons gamma (4) et/ou comme un dispositif de détection sensible à la position et/ou comme un dispositif de détection de particules.

6. Dispositif d'imagerie (1) selon l'une quelconque des précédentes revendications, **caractérisé en ce que** les autres dispositifs parmi lesdits dispositifs de rayonnement à émission diamétrale (8), lesdits dispositifs de détection sensibles à la position (5) et lesdits dispositifs de détection de coïncidence (4), sont agencés de manière fixe les uns par rapport aux autres.

7. Dispositif d'imagerie (1) selon l'une quelconque des précédentes revendications, **caractérisé en ce qu'**au moins certaines parties (4, 5, 8) dudit dispositif d'imagerie (1) sont montées sur un dispositif de support mobile (A).

8. Dispositif d'imagerie (1) selon l'une quelconque des précédentes revendications, **caractérisé en ce qu'**au moins un desdits dispositifs de détection sensibles à la position (5) et/ou au moins un desdits dispositifs de détection de coïncidence (4) est au moins en partie et/ou au moins à certains moments de type à résolution en énergie.

9. Dispositif d'imagerie (1) selon l'une quelconque des précédentes revendications, comprenant un dispositif de détection supplémentaire sensible à la position (5) et/ou un dispositif de rayonnement supplémentaire à émission diamétrale (8). [Korrigiert !!]
